# EUROPÄISCHE PATENTANMELDUNG

(11) **EP 1 215 384 A2**
(43) Veröffentlichungstag der Anmeldung: **19.06.2002**
(21) Anmeldenummer: 01125225.1
(22) Anmeldetag: 24.10.2001
(51) Int. Cl.: F02D 41/02, F02D 33/02, F02D 23/02, F02B 37/20, F02D 41/40

(54) **Verfahren zur Verbesserung des Ansprechverhaltens von Turboladern**

(30) Priorität: 12.12.2000 DE 10061796
(71) Anmelder: MAN NUTZFAHRZEUGE AG, 80995 München (DE)
(72) Erfinder: Döring, Andreas, Dipl.-Ing., 90403 Nürnberg (DE); Lämmermann, Reinhard, Dipl.-Ing., 90547 Stein (DE); Sauter, Hans, Dipl.-Ing., 90459 Nürnberg (DE)

(57) **Zusammenfassung**

Die Erfindung bezieht sich auf ein Verfahren zur Verbesserung des Ansprechverhaltens von Turboladern. Im instationären Betrieb von Brennkraftmaschinen tritt das sogenannte Turboloch auf. Um dieses zu vermeiden wird erfindungsgemäß vorgeschlagen, die Enthalpie des Abgases zu erhöhen. Bewerkstelligt wird dies dadurch, daß eine sehr späte Nacheinspritzung erfolgt, bei der der Brennstoff im Zylinder zwar noch verdampft, aber nicht mehr verbrennt. Die eigentliche Verbrennung, oder genauer ausgedrückt, Nachoxidation erfolgt an einem Katalysator der im Abgasstrang zwischen dem Auslaßventil und dem Eingang zur Abgasturbine des ATL vorgesehen ist. Durch diese katalytische Nachoxidation steigt die Temperatur des Abgases und somit seine Enthalpie. Der ATL wird dadurch im gewünschten Sinn beschleunigt. Ein besonderer Vorteil des erfindungsgemäßen Verfahrens ist darin zu sehen, daß an der Brennkraftmaschine selbst keine baulichen Veränderungen vorgenommen werden müssen.

## Beschreibung

Die Erfindung bezieht sich auf ein Verfahren gemäß dem Oberbegriff des Patentanspruches 1.

Aus EP 0 621 400 B1 ist es bekannt, die Einspritzung bei Dieselbrennkrafimaschinen mit Common-Rail-Einspritzsystem in eine Primär- und Sekundäreinspritzung zu unterteilen. Die Sekundäreinspritzung erfolgt so, daß der Brennstoff noch zündet und daß sich durch die Verbrennung in der Expansionsphase die Abgastemperatur erhöht. Durch die gestiegene Abgastemperatur wird ein im Abgassystem angeordneter Katalysator aus einem kalten Zustand heraus schneller erwärmt und somit schneller aktiviert um die Konzentration der HC-Anteile und Stickoxide zu reduzieren.

Aus DE 30 46 876 C2 ist eine Brennkraftmaschine mit Auflader bekannt, bei der zur Beschleunigung des ATL der Abgasturbine eine Brennkammer vorgeschaltet ist. Die Brennkammer wird mit verdichteter Luft aus dem Verdichter des ATL versorgt. Beim Hochfahren der Brennkraftmaschine wird in die Brennkammer Brennstoff eingespritzt, so daß sich Temperatur und Enthalpie des Abgases erhöht. Die der Brennkammer nachgeschaltete Abgasturbine wird somit schneller hochgefahren. Durch Rückkopplungseffekte wird die Brennkraftmaschine ebenfalls im Ansprechverhalten verbessert. Eine derartige Einrichtung erfordert aber einen hohen baulichen Aufwand, der bei Anwendung in gewöhnlichen Nutzfahrzeugen unvertretbar ist.

Aufgabe der Erfindung ist es, daß Ansprechverhalten eines ATL und der damit gekoppelten Brennkraftmaschine signifikant zu verbessern, ohne den baulichen Aufwand nennenswert zu erhöhen.

Gelöst wird diese Aufgabe durch die kennzeichnenden Merkmale des Patentanspruches 1.

Das erfindungsgemäße Verfahren führt über die Erhöhung des Abgasdruckes und einer gleichzeitigen Erhöhung der Abgasenthalpie als Folge der Temperaturerhöhung zu einer deutlichen Erhöhung der Beschleunigung des ATL. Durch Rückkopplungseffekte verbessert sich auch das Ansprechverhalten der mit dem ATL gekoppelten Brennkraftmaschine. Das erfindungsgemäße Verfahren erfordert auch keine Eingriffe in die Konstruktion der Brennkraftmaschine selbst. Vielmehr ist nur ein Eingriff in die Software des elektronischen Motormanagements erforderlich, um den Zeitpunkt der Nacheinspritzung so zu regeln, daß eine Verdampfung des Brennstoffes erfolgt, ohne daß Zündung im Zylinder stattfindet. Bei Anwendung eines Common-Rail-Einspritzsystems ist dies problemlos möglich.

Als Mittel zur Oxidation des Gemisches aus Brennstoffdampf und dem Restsauerstoff enthaltenden Abgas wird nach Anspruch 2 ein Katalysator vorgeschlagen, der stromab des Auslaßventils aber noch vor der Turbine des ATL angeordnet ist. Der Katalysator kann so ausgeführt werden, daß er neben der Oxidationsaktivität für HG und CO auch NOₓ Reduktionspotential besitzt.

Weitere vorteilhafte Maßnahmen zur Umsetzung des erfindungsgemäßen Verfahrens sind den Unteransprüchen 3 bis 14 zu entnehmen.

Bei aufgeladenen Dieselbrennkraftmaschinen besteht ein Problem im Anspruchverhalten des ATL und der mit ihm gekoppelten Brennkraftmaschine. Aufgrund ihrer hohen Leistungsdichte und ihres günstigen Wirkungsgrades werden aufgeladene Brennkraftmaschinen überall dort eingesetzt, wo hohe Leistung und Wirtschaftlichkeit bei geringer Baugröße verlangt werden. So haben sie sich vor allem im Fahrzeugbereich und hier speziell bei dieselbetriebenen Aggregaten durchgesetzt. Das Problem, das sich im Fahrzeug jedoch stellt, ist der stark instationäre Betrieb der Motoren. Hier bereiten vor allem Beschleunigungsvorgänge Schwierigkeiten: Da dem Turbolader die Energie, die er für die Verdichtung auf der Saugseite benötigt, auf der Abgasseite noch nicht zur Verfügung steht, kommt es zum sogenannten Turboloch; d.h. dem Motor steht in diesem Moment keine ausreichende Luftmenge zur Verfügung, das Luftverhältnis Lambda fällt abrupt ab, der Kraftstoff wird nicht mehr vollständig verbrannt. Neben der verzögerten Leistungsentfaltung ist der, vor allem bei Dieselmotoren auftretende Rußstoß ein unerwünschter Nebeneffekt des kurzzeitig zu niedrigen Luftverhältnisses. Das erfindungsgemäße Verfahren löst diese Problematik durch eine Anhebung der Abgasenergie. Moderne Einspritzsysteme, wie das Common-Rail-Einspritzsystem gewährleisten einen gleichbleibend hohen Einspritzdruck über den gesamten Arbeitstakt des Zylinders, elektronisch frei wählbare Einspritzzeitpunkte und unterteilte Einspritzungen. Diese Möglichkeiten werden ausgenutzt, um der Haupteinspritzung eine zweite, sehr späte Nacheinspritzung nachzuschalten. Üblicherweise wird eine Nacheinspritzung dazu benutzt, durch die einsetzende Verbrennung, Rußpartikel, die während der Haupteinspritzung gebildet wurden, nachzuoxidieren und so die Partikelemissionen abzusenken. Um eine Entzündung der Kraftstofftröpfchen und deren vollständige Verbrennung sicherzustellen, wird der Zeitpunkt der Nacheinspritzung daher üblicherweise spätestens 20° nach dem Ende der Haupteinspritzung gewählt. Spätere Einspritzzeitpunkte bis ca. 90° nach dem oberen Totpunkt erhöhen auf Grund der unvollständigen Verbrennung der eingedüsten Kraftstofftröpfchen die Rußemissionen rapide.

Hier setzt nun der allgemeine Erfindungsgedanke ein. Legt man den Zeitpunkt der Nacheinspritzung noch später, also kurz vor oder sogar nach Öffnung der Auslaßventile, so findet keine Verbrennung der Kraftstofftröpfchen mehr statt. Vielmehr kommt es noch im Zylinder selbst zu einer Verdampfung, sowie zur Bildung eines homogenen Gemisches aus Abgas und Brennstoffdampf. Das Abgas des Dieselmotors enthält noch ausreichend Sauerstoff für eine nachfolgende Oxidation. Durch die Oxidation des Gemisches an den Oberflächen eines Katalysator während des Ausstoßtaktes steigt die Abgastemperatur sowie der Abgasdruck stark an, diese höhere Abgasenergie kommt dem Turbolader zugute: Der Ladedruck und das Luftverhältnis steigen deutlich an. In Verbindung mit der homogenen Nachverbrennung sinken sowohl die Partikel- wie auch die NOₓ-Emissionen unterhalb der Werte ohne extreme späte Nacheinspritzung ab.

Der eigentliche Vorteil des Verfahrens zeigt sich jedoch bei instationärem Motorbetrieb: Da bei Beschleunigungsphasen bereits ein höherer Ladedruck zur Verfügung steht, sinkt das Luftverhältnis nicht so stark ab, der Rußstoß wird deutlich abgeschwächt. Die Brennkraftmaschine erreicht schneller den gewünschten höheren Lastpunkt.

Um erhöhten Kraftstoffverbrauch zu vermeiden, wird die homogene Nachoxidation nur aktiviert, wenn sie benötigt wird, d.h. wenn Rußstöße durch positive Lastaufschaltung zu erwarten sind. Bei kleinen Turboladern, die relativ schnell ansprechen, reicht es aus, die Nacheinspritzung nur dann zu aktivieren, wenn eine plötzliche Lastanforderung an das Aggregat gestellt wird. Bei größeren und somit trägeren Turboladern ist es sinnvoll, die Nacheinspritzung im Leerlauf und/oder Schwachlastbereich dauerhaft zu applizieren, um bei plötzlicher Lastaufschaltung schon von höheren Turboladerdrehzahlen zu starten. Das Problem, das sich bei dem Verfahren der sehr späten Nacheinspritzung stellt, ist, daß bei längeren Schwachlastphasen, wie sie z.B. bei Stadtfahrten auftreten, oder auch im Schubbetrieb die Abgastemperaturen sehr stark absinken und nicht mehr ausreichen, daß Gasgemisch zu oxidieren. Daher sollten die Abgastemperaturen sensiert und die Zuschaltung der homogenen Nachoxidation nicht nur in Abhängigkeit von Lastpunkt und/oder Laständerungsgeschwindigkeit, sondern auch in Abhängigkeit der Abgastemperatur geregelt werden. Bei zu niedrigen Abgastemperaturen ist eine Aktivierung nicht sinnvoll, da dabei keine Oxidation der eingedüsten Kohlenwasserstoffe mehr stattfindet und es zu erhöhten Kohlenwasserstoffemissionen kommt. Um die Anspringtemperatur abzusenken, werden in den Abgasstrang vor dem ATL Oberflächen eingebracht, die Kohlenwasserstoff- und Kohlenmonoxidoxidationsaktivität besitzen. Diese können z.B. aus metallischen Katalysatorträgern mit einer Oberfläche aus Mischoxiden der Komponenten Al₂O₃, TiO₂, WO₃, V₂O₅, SiO₂ oder Zeolithen bestehen. Auch Elemente der Platingruppe, sowie Cer und Zirkon besitzen eine hohe Kohlwasserstoffoxidationsaktivität. Um die NOₓ-Emissionen weiter abzusenken, können NOₓ-Speicherkatalysatoren vor Turbolader eingesetzt werden, die aufgrund der hohen Temperaturen leicht regeneriert werden können. Zudem ist es möglich, die abgasberührten Teile des Abgasstranges, wie die Innenfläche des Zylinderkopfes, des Abgassammlers, des Verdichtergehäuses sowie die Ventile, die Ventilschäfte und das Verdichterlaufrad mit einer katalytisch aktiven Schicht zur Kohlenwasserstoffoxidation zu versehen. Durch diese Maßnahmen werden die Kohlenwasserstoffe nicht nur in einer homogenen Gasphasenreaktion oxidiert, sondern auch an den katalytisch aktiven Oberflächen, die sich durch die exotherme und heterogene Reaktion erwärmen. Durch den Einsatz von Katalysatoren sinkt die Anspringtemperatur des Systems von ca. 280°C auf unter 200°C ab. Werden die Motoren im äußersten Schwachlastbereich betrieben, wie es z.B. bei Pkw- oder Stadtbusmotoren der Fall ist, so kann die Temperatur unter die oben beschriebenen 200°C absinken.

Die Regelung des Verfahrens kann über elektronische Steuergeräte erfolgen. Im Schwachlast- bzw. Leerlaufbetrieb muß durch geeignete Maßnahmen das Pumpen des Turboladers verhindert werden. Dies kann durch Abblasen der verdichteten Ladeluft und/oder durch Drosselung der Saugluft erfolgen. Die Vorgehensweise kann ebenfalls dazu verwendet werden, einer zu starken Abkühlung des Abgases im Schwachlastbereich entgegenzuwirken. Gegebenenfalls ist eine Überwachung der Turboladerdrehzahl sinnvoll.

## Patentansprüche

1. Verfahren zur Verbesserung des Ansprechverhaltens von Turboladern beim instationären Betrieb einer luftverdichtenden Brennkraftmaschine, bei der die Einspritzung in eine Haupteinspritzung und mindestens eine Nacheinspritzung unterteilt ist und beide Einspritzungen mit demselben Injektor erfolgen, **dadurch gekennzeichnet, daß** bei positiven Laständerungen und/oder im Leerlauf und/oder im Schwachlastbetrieb die Nacheinspritzung extrem spät erfolgt, derart, daß durch die Wahl des Zeitpunktes der Nacheinspritzung eine vollständige Verdampfung des Brennstoffes im Zylinder erreicht wird, ohne daß das Gemisch aus Brennstoffdampf und Restsauerstoff des Abgases im Zylinder zündet und daß das Gemisch aus Brennstoffdampf und Abgas erst im Abgastrakt zwischen Auslaßventil und Eintritt in eine Abgasturbine eines ATL durch besondere Mittel zur Oxidation gebracht wird.

2. Verfahren nach Anspruch 1, **dadurch gekennzeichnet, daß** das Mittel zur Oxidation des Brennstoffdampf-Abgasgemisches als ein Katalysator ausgebildet ist, welcher zwischen Auslaßventil und einem Eingang der Abgasturbine angeordnet ist, wobei das Gemisch zur Oxidation die Oberflächen des Katalysators bestreicht.

3. Verfahren nach den Ansprüchen 1 und 2, **dadurch gekennzeichnet, daß** zur katalytischen Oxidation aktive Oberflächen benutzt werden, welche Mischoxide aus den Elementen Aluminium und/oder Wolfram und/oder Vanadium und/oder Silizium und/oder Cer und/oder Zirkon enthalten.

4. Verfahren nach den Ansprüchen 1 bis 3, **dadurch gekennzeichnet, daß** die katalytisch aktiven Oberflächen aus Zeolithen bestehen.

5. Verfahren nach den Ansprüchen 1 bis 4, **dadurch gekennzeichnet, daß** die katalytisch aktive Schicht Edelmetalle, wie Elemente der Platingruppe enthält.

6. Verfahren nach den Ansprüchen 1 bis 5, **dadurch gekennzeichnet, daß** die katalytisch aktive Oberfläche NOₓ-Speicheraktivität besitzt.

7. Verfahren nach den Ansprüchen 1 bis 6, **dadurch gekennzeichnet, daß** die abgasberührten Teile der Zylinderköpfe und/oder des Abgassammler und/oder des Auslaßventile und/oder des Turbinengehäuses und/oder des Turbinenlaufrades mit der katalytisch aktiven Schicht versehen werden.

8. Verfahren nach den Ansprüchen 1 bis 7, **dadurch gekennzeichnet, daß** beheizte Oberflächen in den Abgasstrang vor Turbolader eingebracht werden.

9. Verfahren nach den Ansprüchen 1 bis 8, **dadurch gekennzeichnet, daß** katalytisch aktive Oberflächen beheizt werden.

10. Verfahren nach den Ansprüchen 1 bis 9, **dadurch gekennzeichnet, daß** die Funktion und der Betrieb der Nacheinspritzung über elektronische Bauelemente gesteuert wird.

11. Verfahren nach den Ansprüchen 1 bis 10, **dadurch gekennzeichnet, daß** eine Drosselung der Saugluft und/oder Abblasen der Ladeluft erfolgt.

12. Verfahren nach den Ansprüchen 10 und 11, **dadurch gekennzeichnet, daß** die Abgastemperatur geregelt wird.

13. Verfahren nach den Ansprüchen 1 bis 12, **dadurch gekennzeichnet, daß** die Turboladerdrehzahl überwacht wird.

14. Verfahren nach den Ansprüchen 1 bis 13, **dadurch gekennzeichnet, daß** die Abgastemperatur sensiert und die Abgaseinspritzung in Abhängigkeit davon aktiviert wird.
